# EUROPÄISCHE PATENTSCHRIFT

(11) **EP 3 838 554 B1**
(45) Veröffentlichungstag und Bekanntmachung des Hinweises auf die Patenterteilung: **27.09.2023**
(21) Anmeldenummer: 20214088.5
(22) Anmeldetag: 15.12.2020
(51) Int. Cl.: B29C 63/00, B60Q 3/54

(54) **VERFAHREN ZUR HERSTELLUNG EINES DURCHLEUCHTBAREN VERKLEIDUNGSTEILS FÜR EIN KRAFTFAHRZEUG UND DURCHLEUCHTBARES VERKLEIDUNGSTEIL**
TRANSLUCENT TRIM PART AND METHOD FOR MANUFACTURING A TRANSLUCENT TRIM PART FOR A MOTOR VEHICLE
PROCÉDÉ DE FABRICATION D'UNE PIÈCE DE REVÊTEMENT TRANSPARENTE POUR UN VÉHICULE AUTOMOBILE ET PIÈCE DE REVÊTEMENT TRANSPARENTE

(30) Priorität: 19.12.2019 DE 102019135136
(43) Veröffentlichungstag der Anmeldung: 23.06.2021
(73) Patentinhaber: REHAU Automotive SE & Co. KG, 95111 Rehau (DE)
(72) Erfinder: Müller, Claus, 95028 Hof (DE)

(56) Entgegenhaltungen:
- WO-A1-2014/029802
- DE-A1-102015 101 012
- DE-A1-102016 109 574
- DE-A1-102016 218 634
- DE-A1-102018 103 919
- DE-B4-102018 103 919
- US-A1- 2016 154 170

## Beschreibung

Die vorliegende Erfindung betrifft ein Verfahren zur Herstellung eines durchleuchtbaren Verkleidungsteils für ein Kraftfahrzeug.

Bekannte Verfahren zur Herstellung eines durchleuchtbaren Verkleidungsteils für ein Kraftfahrzeug, umfassen die folgenden Schritte:
- Bereitstellen eines dünnwandigen und dreidimensional ausgebildeten Verkleidungsteilgrundkörpers mit einer bestimmungsgemäßen Sichtseite und einer der Sichtseite gegenüberliegenden Innenseite, wobei der Verkleidungsteilgrundkörper aufgrund seines Materials zumindest in einzelnen Bereichen von Lichtstrahlung durchstrahlbar ist,
- Anordnen von Lichtquellen auf der Innenseite des Verkleidungsteilgrundkörpers hinter den durchstrahlbaren Bereichen, wobei der Schritt des Anordnens von Lichtquellen durch das Bereitstellen einer der Innenkontur des dreidimensional geformten Verkleidungsteilgrundkörpers entsprechend konturierten Folie erfolgt, die mit der Innenseite des Verkleidungsteilgrundkörpers verbunden wird.

Ein entsprechend hergestelltes durchleuchtbares Verkleidungsteil kann der Offenlegungschrift DE 10 2015 121 006 A1 entnommen werden.

Ein gattungsgemäßes Verfahren zur Herstellung eines Verkleidungsteils kann der DE 10 2016 218 634 A1 entnommen werden. Weitere Verfahren zu Herstellung ähnlicher Verkleidungsteile sind in den Dokumenten DE 10 2018 103 919 A1, WO 2014/029802 A1, US 2016/154170 A1, DE 10 2016 109 574 A1 und DE 10 2015 101 012 A1 offenbart.

Ein aus diesem Stand der Technik bekanntes Verkleidungsteil und Herstellverfahren eignet sich jedoch nicht für filigrane und mehrteilige Licht-Dekorelemente, wie beispielsweise ein sogenanntes Diamantgitter, mit einer Vielzahl von einzelnen durchstrahlbaren Bereichen, da das Anordnen der Lichtquellen auf der Innenseite des Verkleidungsteils hier mit einem hohen Aufwand verbunden und zudem relativ unpräzise ist.

Aufgabe der vorliegenden Erfindung ist es daher ein Verfahren und ein durchleuchtbares Verkleidungsteil anzugeben, bei welchem sich die Lichtquellen einfach und zuverlässig an der richtigen Position hinter den durchstrahlbaren Bereichen anordnen lassen.

Diese Aufgabe wird gelöst durch ein Verfahren zur Herstellung eines durchleuchtbaren Verkleidungsteils für ein Kraftfahrzeug, umfassend die folgenden Schritte:
- Bereitstellen eines dünnwandigen und dreidimensional ausgebildeten Verkleidungsteilgrundkörpers mit einer bestimmungsgemäßen Sichtseite und einer der Sichtseite gegenüberliegenden Innenseite, wobei der Verkleidungsteilgrundkörper aufgrund seines Materials zumindest in einzelnen Bereichen von Lichtstrahlung durchstrahlbar ist,
- Anordnen von Lichtquellen auf der Innenseite des Verkleidungsteilgrundkörpers hinter den durchstrahlbaren Bereichen,
wobei der Schritt des Anordnens von Lichtquellen durch das Bereitstellen einer der Innenkontur des dreidimensional geformten Verkleidungsteilgrundkörpers entsprechend konturierten Folie erfolgt, die mit der Innenseite des Verkleidungsteilgrundkörpers verbunden wird, wobei auf der Folie elektrische Leiterbahnen und als Lichtquellen eine Vielzahl von Leuchtdioden angeordnet sind, die über die Leiterbahnen bestrombare sind, wobei die auf der Folie angeordneten Leuchtdioden durch ihre Lageposition auf der Folie hinter den durchstahlbaren Bereichen des Verkleidungsteilgrundkörpers positioniert werden, sodass das von den Leuchtdioden aussendbare Licht durch die durchstrahlbaren Bereiche des Verkleidungsteilgrundkörpers nach außen zur Sichtseite gelangt.

Die Bereitstellung der konturierten Folie kann durch das Tiefziehen und/oder Warmumformen einer Trägerfolie erfolgen. Die Trägerfolie kann bevorzugt vor dem Tiefziehen und/oder Warmumformen mit den elektrischen Leiterbahnen versehen werden.

Die konturierte Folie kann vor dem Verbinden der Folie mit der Innenseite des Verkleidungsteilgrundkörpers mit den Leuchtdioden bestückt werden. Bevorzugt werden die Leuchtdioden hierbei gleichzeitig mit den Leiterbahnen auf der Folie kontaktiert.

Die konturierte Folie kann mittels einer Klebstoffschicht mit der Innenseite des Verkleidungsteilgrundkörpers verbunden werden.

Der Verkleidungsteilgrundkörper kann in den durchstrahlbaren Bereichen Vertiefungen und/oder Ausdünnungen aufweisen, wobei die Leuchtdioden ganz oder teilweise in den Vertiefungen und/oder Ausdünnungen positioniert sind oder werden.

Zusätzlich oder als Alternative kann die konturierte Folie im Bereich der angeordneten Leuchtdioden Ausformungen aufweisen, wobei die Leuchtdioden teilweise oder vollständig in den Ausformungen aufgenommen sind oder werden.

Bevorzugt kann der Klebstoff der Klebstoffschicht die Vertiefungen und/oder Ausdünnungen und/oder Ausformungen ausfüllen und hierbei die Leuchtdioden einschließen. Hierbei kann der Klebstoff der Klebstoffschicht lichtstreuende Partikel umfassen.

Es können wenigstens 20 Leuchtdioden, bevorzugt wenigsten 40 Leuchtdioden, weiter bevorzugt wenigstens 60 Leuchtdioden vorgesehen sein.

Das Material des Verkleidungsgrundkörpers kann ein transluzentes oder transparentes Material sein. Das Material des Verkleidungsgrundkörpers kann bevorzugt Polypropylen und/oder Polycarbonat und/oder Polyethylenterephthalat und/oder Acrylnitril-Butadien-Styrol und/oder Polymethylmethacrylat und/oder Polyamid enthalten oder hieraus gebildet sein.

Der Verkleidungsgrundkörper weist bevorzugt eine Wandstärke im Bereich von 0,6 mm bis 5 mm auf.

Weiterhin Teil der Erfindung ist ein durchleuchtbares Verkleidungsteil, insbesondere hergestellt mit einem vorstehend beschriebenen Verfahren, umfassend:
- einen dünnwandigen und dreidimensional ausgebildeten Verkleidungsteilgrundkörper mit einer bestimmungsgemäßen Sichtseite und einer der Sichtseite gegenüberliegenden Innenseite, wobei der Verkleidungsteilgrundkörper aufgrund seines Materials zumindest in einzelnen Bereichen von Lichtstrahlung durchstrahlbar ist, und
- Lichtquellen auf der Innenseite des Verkleidungsteilgrundkörpers hinter den durchstrahlbaren Bereichen,
wobei eine der Innenkontur des dreidimensional geformten Verkleidungsteilgrundkörpers entsprechend konturierte Folie vorgesehen ist, die mit der Innenseite des Verkleidungsteilgrundkörpers verbunden ist, wobei auf der Folie elektrische Leiterbahnen und als Lichtquellen Leuchtdioden angeordnet sind, die über die Leiterbahnen bestrombare sind, wobei die auf der Folie angeordneten Leuchtdioden durch ihre Lageposition auf der Folie hinter den durchstahlbaren Bereichen des Verkleidungsteilgrundkörpers positioniert sind, sodass das von den Leuchtdioden aussendbare Licht durch die durchstrahlbaren Bereiche des Verkleidungsteilgrundkörpers nach außen zur Sichtseite gelangen können.

Die konturierte Folie kann bevorzugt mittels einer Klebstoffschicht mit der Innenseite des Verkleidungsteilgrundkörpers verbunden sein.

Der Verkleidungsteilgrundkörper kann in den durchstrahlbaren Bereichen Vertiefungen und/oder Ausdünnungen aufweisen, wobei die Leuchtdioden ganz oder teilweise in den Vertiefungen und/oder Ausdünnungen positioniert sind.

Alternativ oder in Kombination kann die konturierte Folie im Bereich der angeordneten Leuchtdioden Ausformungen aufweisen, wobei die Leuchtdioden teilweise oder vollständig in den Ausformungen aufgenommen sind.

Der Klebstoff der Klebstoffschicht kann die Vertiefungen und/oder Ausdünnungen und/oder Ausformungen ausfüllen und hierbei die Leuchtdioden einschließen.

Der Klebstoff der Klebstoffschicht kann lichtstreuende Partikel umfassen.

Es können wenigstens 20 Leuchtdioden, bevorzugt wenigsten 40 Leuchtdioden, weiter bevorzugt wenigstens 60 Leuchtdioden vorgesehen sein.

Das in dem beanspruchten Verfahren beschriebene Verkleidungsteil oder das beanspruchte durchleuchtbare Verkleidungsteil kann insbesondere eine Stoßfängerverkleidung oder eine Kotflügelverkleidung oder ein Spoiler oder eine Türverkleidung oder eine Schwellerverkleidung oder ein Dachmodul oder eine Kühlerverkleidung sein.

Im Folgenden wird die Erfindung anhand lediglich Ausführungsbeispiele darstellender Figuren näher erläutert. Gleiche oder funktionsgleiche Elemente sind mit den gleichen Bezugszeichen versehen.

Es zeigen:
- Fig. 1: eine dreidimensionale Explosionsdarstellung eines erfindungsgemäßen Verkleidungsteils;
- Fig. 2 - 4: Schnittdarstellungen durch einen der durchleuchtbaren Bereiche von Varianten des erfindungsgemäßen Verkleidungsteils.

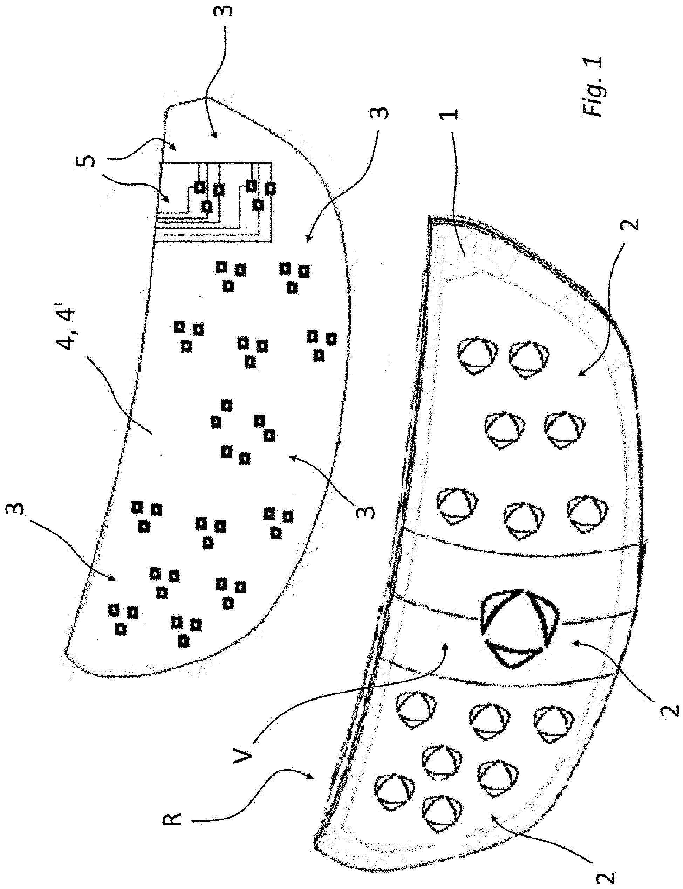

Die Fig. 1 zeigt ein erfindungsgemäßes durchleuchtbares Verkleidungsteil, umfassend:
- einen dünnwandigen und dreidimensional ausgebildeten Verkleidungsteilgrundkörper 1 mit einer bestimmungsgemäßen Sichtseite V und einer der Sichtseite V gegenüberliegenden Innenseite R, wobei der Verkleidungsteilgrundkörper 1 aufgrund seines Materials zumindest in einzelnen Bereichen 2 von Lichtstrahlung durchstrahlbar ist,
- Lichtquellen 3 auf der Innenseite R des Verkleidungsteilgrundkörpers 1 hinter den durchstrahlbaren Bereichen 2.

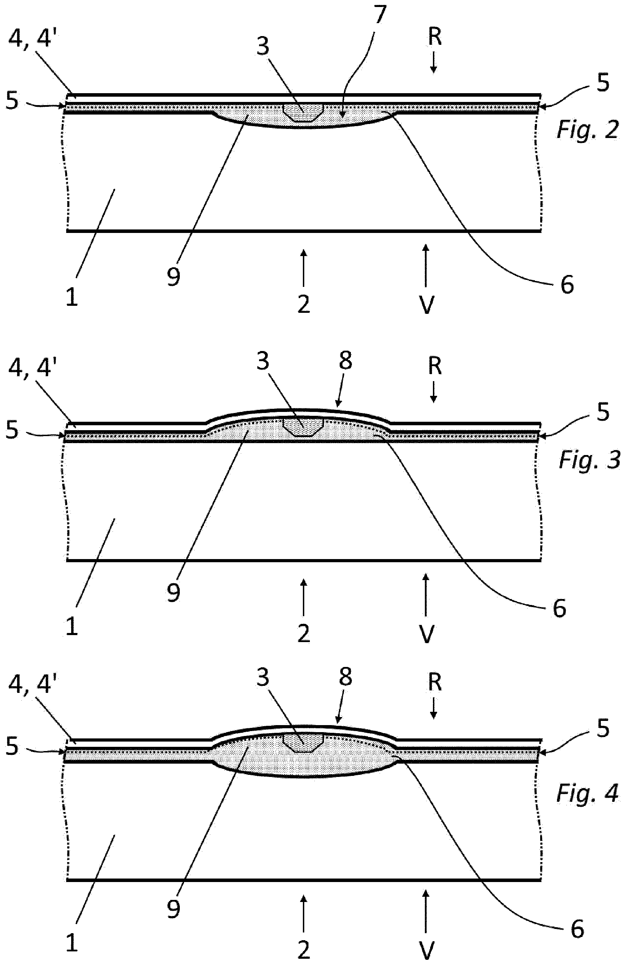

Es ist eine der Innenkontur des dreidimensional geformten Verkleidungsteilgrundkörpers 1 entsprechend konturierte Folie 4 vorgesehen, die mit der Innenseite R des Verkleidungsteilgrundkörpers 1 verbunden ist (in dieser Explosionsdarstellung entsprechend im unverbundenen Zustand dargestellt). Auf der Folie 4 sind elektrische Leiterbahnen 5 und als Lichtquellen 3 Leuchtdioden 3 angeordnet, die über die Leiterbahnen 5 bestrombare sind (aus Gründen der Übersichtlichkeit sind nicht alle Leiterbahnen dargestellt, bzw. können diese auch auf der der Seite mit den Leuchtdioden gegenüberliegenden Seite der Folie 4 angeordnet sein). Die auf der Folie 4 angeordneten Leuchtdioden 3 sind durch ihre Lageposition auf der Folie 4 hinter den durchstahlbaren Bereichen 2 des Verkleidungsteilgrundkörpers 1 positioniert, sodass das von den Leuchtdioden 3 aussendbare Licht durch die durchstrahlbaren Bereiche 2 des Verkleidungsteilgrundkörpers 1 nach außen zur Sichtseite V gelangen kann (vgl. Fig. 2 bis Fig. 4).

Anhand der Fig. 1 lässt sich auch das erfindungsgemäße Verfahren erläutern:
Verfahren zur Herstellung eines durchleuchtbaren Verkleidungsteils für ein Kraftfahrzeug, umfassend die folgenden Schritte:
- Bereitstellen eines dünnwandigen und dreidimensional ausgebildeten Verkleidungsteilgrundkörpers 1 mit einer bestimmungsgemäßen Sichtseite V und einer der Sichtseite V gegenüberliegenden Innenseite R, wobei der Verkleidungsteilgrundkörper 1 aufgrund seines Materials zumindest in einzelnen Bereichen 2 von Lichtstrahlung durchstrahlbar ist,
- Anordnen von Lichtquellen 3 auf der Innenseite R des Verkleidungsteilgrundkörpers 1 hinter den durchstrahlbaren Bereichen 2,
wobei der Schritt des Anordnens von Lichtquellen 3 durch das Bereitstellen einer der Innenkontur des dreidimensional geformten Verkleidungsteilgrundkörpers 1 entsprechend konturierten Folie 4 erfolgt, die mit der Innenseite R des Verkleidungsteilgrundkörpers 1 verbunden wird, wobei auf der Folie 4 elektrische Leiterbahnen 5 und als Lichtquellen 3 eine Vielzahl von Leuchtdioden 3 angeordnet sind, die über die Leiterbahnen 5 bestrombare sind, wobei die auf der Folie 4 angeordneten Leuchtdioden 3 durch ihre Lageposition auf der Folie 4 hinter den durchstahlbaren Bereichen 2 des Verkleidungsteilgrundkörpers 1 positioniert werden, sodass das von den Leuchtdioden 3 aussendbare Licht durch die durchstrahlbaren Bereiche des Verkleidungsteilgrundkörpers 1 nach außen zur Sichtseite V gelangt (vgl. hierzu Fig. 2 bis Fig. 4).

Die Bereitstellung der konturierten Folie 4 kann durch das Tiefziehen und/oder Warmumformen einer Trägerfolie 4' erfolgen. Hierbei wird die Trägerfolie 4' bevorzugt vor dem Tiefziehen und/oder Warmumformen mit den elektrischen Leiterbahnen 5 versehen.

Die konturierte Folie 4 wird vor dem Verbinden der Folie 4 mit der Innenseite R des Verkleidungsteilgrundkörpers 1 mit den Leuchtdioden 3 bestückt, wobei die Leuchtdioden 3 hierbei mit den Leiterbahnen 5 auf der Folie 4 kontaktiert werden.

In den Fig. 2 bis Fig. 4 ist dargestellt, dass die konturierte Folie 4 bevorzugt mittels einer Klebstoffschicht 6 mit der Innenseite R des Verkleidungsteilgrundkörpers 1 verbunden wird.

In der Fig. 2 ist dargestellt, dass der Verkleidungsteilgrundkörper 1 in den durchstrahlbaren Bereichen 2 Vertiefungen 7 und/oder Ausdünnungen 7 aufweist, wobei die Leuchtdioden 3 ganz oder teilweise in den Vertiefungen 7 und/oder Ausdünnungen 7 positioniert sind.

In der Fig. 3 ist dargestellt, dass die konturierte Folie 4 im Bereich der angeordneten Leuchtdioden 3 Ausformungen 8 aufweist, wobei die Leuchtdioden 3 teilweise oder vollständig in den Ausformungen 8 aufgenommen sind.

In der Fig. 4 ist als weitere Variante dargestellt, dass der Verkleidungsteilgrundkörper 1 in den durchstrahlbaren Bereichen 2 Vertiefungen 7 und/oder Ausdünnungen 7 und die konturierte Folie 4 im Bereich der angeordneten Leuchtdioden 3 Ausformungen 8 aufweist, wobei die Leuchtdioden 3 ganz oder teilweise in den Vertiefungen 7 und/oder Ausdünnungen 7 positioniert und/oder in den Ausformungen 8 aufgenommen sind.

In den Fig. 2 bis Fig. 4 ist erkennbar, dass der Klebstoff der Klebstoffschicht 6 die Vertiefung 7 und/oder Ausdünnung 7 und/oder Ausformung 8 ausfüllt und hierbei die Leuchtdioden 3 einschließt. Der Klebstoff der Klebstoffschicht 6 kann hierbei lichtstreuende Partikel 9 umfassen.

## Patentansprüche

1. Verfahren zur Herstellung eines durchleuchtbaren Verkleidungsteils für ein Kraftfahrzeug, umfassend die folgenden Schritte:
- Bereitstellen eines dünnwandigen und dreidimensional ausgebildeten Verkleidungsteilgrundkörpers (1) mit einer bestimmungsgemäßen Sichtseite (V) und einer der Sichtseite (V) gegenüberliegenden Innenseite (R), wobei der Verkleidungsteilgrundkörper (1) aufgrund seines Materials zumindest in einzelnen Bereichen (2) von Lichtstrahlung durchstrahlbar ist,
- Anordnen von Lichtquellen (3) auf der Innenseite (R) des Verkleidungsteilgrundkörpers (1) hinter den durchstrahlbaren Bereichen (2),
wobei der Schritt des Anordnens von Lichtquellen (3) durch das Bereitstellen einer der Innenkontur des dreidimensional geformten Verkleidungsteilgrundkörpers (1) entsprechend konturierten Folie (4) erfolgt, die mit der Innenseite (R) des Verkleidungsteilgrundkörpers (1) verbunden wird,
**dadurch gekennzeichnet, dass**
auf der Folie (4) elektrische Leiterbahnen (5) und als Lichtquellen (3) eine Vielzahl von Leuchtdioden (3) angeordnet sind, die über die Leiterbahnen (5) bestrombare sind, wobei die auf der Folie (4) angeordneten Leuchtdioden (3) durch ihre Lageposition auf der Folie (4) hinter den durchstahlbaren Bereichen (2) des Verkleidungsteilgrundkörpers (1) positioniert werden, sodass das von den Leuchtdioden (3) aussendbare Licht durch die durchstrahlbaren Bereiche des Verkleidungsteilgrundkörpers (1) nach außen zur Sichtseite (V) gelangt.

2. Verfahren nach Anspruch 1, **dadurch gekennzeichnet, dass** die Bereitstellung der konturierten Folie (4) durch das Tiefziehen und/oder Warmumformen einer Trägerfolie (4') erfolgt.

3. Verfahren nach Anspruch 2, **dadurch gekennzeichnet, dass** die Trägerfolie (4') vor dem Tiefziehen und/oder Warmumformen mit den elektrischen Leiterbahnen (5) versehen wird.

4. Verfahren nach einem der vorstehenden Ansprüche, **dadurch gekennzeichnet, dass** die konturierte Folie (4) vor dem Verbinden der Folie (4) mit der Innenseite (R) des Verkleidungsteilgrundkörpers (1) mit den Leuchtdioden (3) bestückt wird, wobei die Leuchtdioden (3) hierbei mit den Leiterbahnen (5) auf der Folie (4) kontaktiert werden.

5. Verfahren nach einem der vorstehenden Ansprüche, **dadurch gekennzeichnet, dass** die konturierte Folie (4) mittels einer Klebstoffschicht (6) mit der Innenseite (R) des Verkleidungsteilgrundkörpers (1) verbunden wird.

6. Verfahren nach einem der vorstehenden Ansprüche, **dadurch gekennzeichnet, dass** der Verkleidungsteilgrundkörper (1) in den durchstrahlbaren Bereichen (2) Vertiefungen (7) und/oder Ausdünnungen (7) aufweist, wobei die Leuchtdioden (3) ganz oder teilweise in den Vertiefungen (7) und/oder Ausdünnungen (7) positioniert sind.

7. Verfahren nach einem der vorstehenden Ansprüche, **dadurch gekennzeichnet, dass** die konturierte Folie (4) im Bereich der angeordneten Leuchtdioden (3) Ausformungen (8) aufweist, wobei die Leuchtdioden (3) teilweise oder vollständig in den Ausformungen (8) aufgenommen sind.

8. Verfahren nach einem der Ansprüchen 5 bis 7, **dadurch gekennzeichnet, dass** der Klebstoff der Klebstoffschicht (6) die Vertiefungen (7) und/oder Ausdünnungen (7) und/oder Ausformungen (8) ausfüllt und hierbei die Leuchtdioden (3) einschließt.

9. Verfahren nach Anspruch 8, **dadurch gekennzeichnet, dass** der Klebstoff der Klebstoffschicht (6) lichtstreuende Partikel (9) umfasst.

10. Durchleuchtbares Verkleidungsteil, insbesondere hergestellt mit einem Verfahren nach einem der vorstehenden Ansprüche, umfassend:
- einen dünnwandigen und dreidimensional ausgebildeten Verkleidungsteilgrundkörper (1) mit einer bestimmungsgemäßen Sichtseite (V) und einer der Sichtseite (V) gegenüberliegenden Innenseite (R), wobei der Verkleidungsteilgrundkörper (1) aufgrund seines Materials zumindest in einzelnen Bereichen (2) von Lichtstrahlung durchstrahlbar ist,
- Lichtquellen (3) auf der Innenseite (R) des Verkleidungsteilgrundkörpers (1) hinter den durchstrahlbaren Bereichen (2),
wobei eine der Innenkontur des dreidimensional geformten Verkleidungsteilgrundkörpers (1) entsprechend konturierte Folie (4) vorgesehen ist, die mit der Innenseite (R) des Verkleidungsteilgrundkörpers (1) verbunden ist,
**dadurch gekennzeichnet, dass**
auf der Folie (4) elektrische Leiterbahnen (5) und als Lichtquellen (3) Leuchtdioden (3) angeordnet sind, die über die Leiterbahnen (5) bestrombare sind, wobei die auf der Folie (4) angeordneten Leuchtdioden (3) durch ihre Lageposition auf der Folie (4) hinter den durchstahlbaren Bereichen (2) des Verkleidungsteilgrundkörpers (1) positioniert sind, sodass das von den Leuchtdioden (3) aussendbare Licht durch die durchstrahlbaren Bereiche (2) des Verkleidungsteilgrundkörpers (1) nach außen zur Sichtseite (V) gelangen kann.

## Claims

1. Method for manufacturing a transparent trim part for a motor vehicle, comprising the following steps:
a. Providing a thin-walled and three-dimensional trim part base body (1) having a visible side (V) corresponding to its intended purpose and an inner side (R) opposite the visible side (V), wherein the trim part base body (1) is able to be penetrated by light radiation at least in individual regions (2) on account of its material,
b. Arranging light sources (3) on the inner side (R) of the trim part base body (1) behind the regions (2) through which radiation can pass,
wherein the step of providing light sources (3) is carried out by providing a film (4) contoured corresponding to the inner contour of the three-dimensionally shaped trim part base body (1), which film is connected to the inner side (R) of the trim part base body (1),
**characterised in that**
electrical conductor tracks (5) and, as light sources (3), a plurality of light-emitting diodes (3) are arranged on the film (4), which light-emitting diodes are able to be supplied with current via the conductor tracks (5), wherein the light-emitting diodes (3) arranged on the film (4) are positioned behind the regions (2) of the trim part base body (1) through which radiation can pass, so that the light which can be emitted by the light-emitting diodes (3) passes through the regions of the trim part base body (1) through which radiation can pass to the outside to the visible side (V).

2. Method according to claim 1, **characterised in that** providing the contoured film (4) is effected by deep-drawing and/or hot-forming a carrier film (4').

3. Method according to claim 2, **characterised in that** the carrier film (4') is provided with electrical conductor tracks (5) prior to deep-drawing and/or hot-forming.

4. Method according to any one of the preceding claims, **characterised in that** the contoured film (4) is fitted with the light-emitting diodes (3) before the film (4) is connected to the inner side (R) of the trim part base body (1), wherein the light-emitting diodes (3) are then brought into contact with the conductor tracks (5) on the film (4).

5. Method according to any one of the preceding claims, **characterised in that** the contoured film (4) is connected to the inner side (R) of the trim part base body (1) by means of an adhesive layer (6).

6. Method according to any one of the preceding claims, **characterised in that** the trim part base body (1) has recesses (7) and/or tapers (7) in the regions (2) through which radiation can pass, wherein the light-emitting diodes (3) are completely or partially positioned in the recesses (7) and/or tapers (7).

7. Method according to any one of the preceding claims, **characterised in that** the contoured film (4) has shaped portions (8) in the region of the arranged light-emitting diodes (3), wherein the light-emitting diodes (3) are completely or partially accommodated in the shaped portions (8).

8. Method according to any one of claims 5 to 7, **characterised in that** the adhesive of the adhesive layer (6) fills the recesses (7) and/or tapers (7) and/or shaped portions (8) and thus encloses the light-emitting diodes (3).

9. Method according to claim 8, **characterised in that** the adhesive of the adhesive layer (6) comprises light-scattering particles (9).

10. Translucent trim part, in particular manufactured by a method according to any one of the preceding claims, comprising:
a. a thin-walled and three-dimensional trim part base body (1) having a visible side (V) corresponding to its intended purpose and an inner side (R) opposite the visible side (V), wherein the trim part base body (1) is able to be penetrated by light radiation at least in individual regions (2) on account of its material,
b. light sources (3) on the inner side (R) of the trim part base body (1) behind the regions (2) through which radiation can pass,
wherein a film (4) contoured corresponding to the inner contour of the three-dimensionally shaped trim part base body (1) is provided, which film is connected to the inner side (R) of the trim part base body (1),
**characterised in that**
electrical conductor tracks (5) and, as light sources, light-emitting diodes (3) are arranged on the film (4), which light-emitting diodes are able to be supplied with current via the conductor tracks (5), wherein the light-emitting diodes (3) arranged on the film (4) are positioned behind the regions (2) of the trim part base body (1) through which radiation can pass, so that the light which can be emitted by the light-emitting diodes (3) can pass through the regions (2) of the trim part base body (1) through which radiation can pass to the outside to the visible side (V).

## Revendications

1. Procédé de fabrication d'une pièce de revêtement transparente pour un véhicule automobile, comprenant les étapes suivantes :
a. mise à disposition d'un corps de base de pièce de revêtement (1) réalisé à parois minces et en trois dimensions avec un côté visible (V) conforme à sa destination et un côté intérieur (R) opposé au côté visible (V), le corps de base de pièce de revêtement (1) pouvant, en raison de son matériau, être traversé par un rayonnement lumineux au moins dans différentes zones (2),
b. disposition de sources de lumière (3) sur le côté intérieur (R) du corps de base de pièce de revêtement (1) derrière les zones (2) pouvant être traversées par un rayonnement,
l'étape de disposition de sources de lumière (3) s'effectuant par la mise à disposition d'un film (4) profilé de manière correspondant au profil intérieur du corps de base de pièce de revêtement (1) formé en trois dimensions, ledit film étant relié au côté intérieur (R) du corps de base de pièce de revêtement (1),
**caractérisé en ce que**
des pistes conductrices (5) électriques et, comme sources de lumière (3), une pluralité de diodes électroluminescentes (3) sont disposées sur le film (4), lesdites diodes électroluminescentes pouvant être alimentées en courant par le biais des pistes conductrices (5), les diodes électroluminescentes (3) disposées sur le film (4) étant positionnées, du fait de leur position sur le film (4), derrière les zones (2) du corps de base de pièce de revêtement (1) pouvant être traversées par un rayonnement, de telle sorte que la lumière pouvant être émise par les diodes électroluminescentes (3) parvient à l'extérieur, jusqu'au côté visible (V), à travers les zones du corps de base de pièce de revêtement (1) pouvant être traversées par un rayonnement.

2. Procédé selon la revendication 1, **caractérisé en ce que** la mise à disposition du film (4) profilé est effectuée par l'emboutissage et/ou le formage à chaud d'un film support (4').

3. Procédé selon la revendication 2, **caractérisé en ce que** le film support (4') est pourvu des pistes conductrices (5) électriques avant l'emboutissage et/ou le formage à chaud.

4. Procédé selon l'une des revendications précédentes, **caractérisé en ce que** le film (4) profilé est équipé des diodes électroluminescentes (3) avant la liaison du film (4) avec le côté intérieur (R) du corps de base de pièce de revêtement (1), les diodes électroluminescentes (3) étant alors mises en contact avec les pistes conductrices (5) sur le film (4).

5. Procédé selon l'une des revendications précédentes, **caractérisé en ce que** le film (4) profilé est relié au côté intérieur (R) du corps de base de pièce de revêtement (1) au moyen d'une couche de matière adhésive (6).

6. Procédé selon l'une des revendications précédentes, **caractérisé en ce que** le corps de base de pièce de revêtement (1) présente, dans les zones (2) pouvant être traversées par un rayonnement, des creux (7) et/ou des amincissements (7), les diodes électroluminescentes (3) étant entièrement ou partiellement positionnées dans les creux (7) et/ou amincissements (7).

7. Procédé selon l'une des revendications précédentes, **caractérisé en ce que** le film (4) profilé présente, dans la zone des diodes électroluminescentes (3) disposées, des parties conformées (8), les diodes électroluminescentes (3) étant entièrement ou partiellement reçues dans les parties conformées (8).

8. Procédé selon l'une des revendications 5 à 7, **caractérisé en ce que** la matière adhésive de la couche de matière adhésive (6) remplit les creux (7) et/ou amincissements (7) et/ou parties conformées (8) et renferme ainsi les diodes électroluminescentes (3).

9. Procédé selon la revendication 8, **caractérisé en ce que** la matière adhésive de la couche adhésive (6) comprend des particules (9) dispersant la lumière.

10. Pièce de revêtement transparente, en particulier fabriquée par un procédé selon l'une des revendications précédentes, comprenant :
a. un corps de base de pièce de revêtement (1) réalisé à parois minces et en trois dimensions avec un côté visible (V) conforme à sa destination et un côté intérieur (R) opposé au côté visible (V), le corps de base de pièce de revêtement (1) pouvant, en raison de son matériau, être traversé par un rayonnement lumineux au moins dans différentes zones (2),
b.des sources de lumière (3) sur le côté intérieur (R) du corps de base de pièce de revêtement (1) derrière les zones (2) pouvant être traversées par un rayonnement,
un film (4) profilé de manière correspondant au profil intérieur du corps de base de pièce de revêtement (1) formé en trois dimensions étant prévu, ledit film étant relié au côté intérieur (R) du corps de base de pièce de revêtement (1),
**caractérisé en ce que**
des pistes conductrices (5) électriques et, comme sources de lumière (3), des diodes électroluminescentes (3) sont disposées sur le film (4), lesdites diodes électroluminescentes pouvant être alimentées en courant par le biais des pistes conductrices (5), les diodes électroluminescentes (3) disposées sur le film (4) étant positionnées, du fait de leur position sur le film (4), derrière les zones (2) du corps de base de pièce de revêtement (1) pouvant être traversées par un rayonnement, de telle sorte que la lumière pouvant être émise par les diodes électroluminescentes (3) peut parvenir à l'extérieur, jusqu'au côté visible (V), à travers les zones (2) du corps de base de pièce de revêtement (1) pouvant être traversées par un rayonnement.
